(19) Europäisches Patentamt
European Patent Office
Office européen des brevets

(11) EP 0 695 316 B1

(12) **EUROPEAN PATENT SPECIFICATION**

(45) Date of publication and mention of the grant of the patent:
**29.12.1997 Bulletin 1997/52**

(21) Application number: **94907543.6**

(22) Date of filing: **11.02.1994**

(51) Int Cl.$^6$: **C08G 59/26**, C08G 59/40, C08K 3/16

(86) International application number:
**PCT/EP94/00389**

(87) International publication number:
**WO 95/21879 (17.08.1995 Gazette 1995/35)**

(54) **URETHANE MODIFIED EPOXY RESIN COMPOSITIONS**
URETHANMODIFIZIERTE EPOXYHARZZUSAMMENSETZUNGEN
COMPOSITIONS DE RESINE EPOXY MODIFIEE PAR URETHANE

(84) Designated Contracting States:
**CH DE ES FR GB IT LI NL SE**

(43) Date of publication of application:
**07.02.1996 Bulletin 1996/06**

(73) Proprietor: **Ciba Specialty Chemicals Holding Inc.
4057 Basel (CH)**

(72) Inventor: **UCHIDA, Hiroshi
Kurashiki-shi, Okayama Prefecturee (JP)**

(56) References cited:
**EP-A- 0 546 602**
**GB-A- 883 994**
**US-A- 3 334 110**

- **DATABASE WPI Derwent Publications Ltd., London, GB; AN 94-106844(13) & JP,A,6 056 961 (ASAHI CIBA KK) 1 March 1994**
- **DATABASE WPI Derwent Publications Ltd., London, GB; AN 87-126375(18) & JP,A,62 068 873 (DENKI KAGAKU KK) 28 March 1987**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 695 316 B1

## Description

The composition of the present invention relates to an epoxy resin composition having excellent heat resistance and curing property. More particularly, this invention relates to an epoxy resin composition suitably employed in such applications as heat resistance, tenacity, adhesion, etc. are required, for example, as civil engineering and building materials, powder coating materials, PCM (precoated metal) coating materials, laminate materials, sealing materials, casting materials, adhesives and composite materials.

Epoxy resins have conventionally been employed in various fields, for example, as civil engineering and building materials, powder coating materials, PCM coating materials, laminate materials, sealing materials, casting materials, adhesives, composite materials, because of their well-balanced heat resistance, chemical resistance, adhesion, etc. Particularly, bisphenol A type epoxy resins have widely been employed, since they have higher levels of such properties.

However, resin materials having conspicuously high performances and reliability compared with the conventional resin materials are now desired in any of the above-mentioned fields. There are particularly high demands for higher heat-resistant resin materials.

Thus, it is attempted to use a polyfunctional epoxy resin such as an epoxy cresol novolak with a view to obtaining improved heat resistance, but the use of such resin brings about reduction in the tenacity, adhesion, etc., disadvantageously.

Meanwhile, it is also possible to improve heat resistance by introducing oxazolidone rings into the backbone of the epoxy resin, but this method also suffers a problem that the curing reaction speed is retarded:

Examples of modified epoxy resins are disclosed in the US patent No. 5,112,932 and the Japanese Kokai Hei 5-43655.

Under such circumstances, this invention is directed to provide a novel epoxy resin composition which has well-balanced heat resistance, tenacity and adhesion and also has a high curing reaction speed.

The present inventors made intensive studies with a view to developing an epoxy resin having excellent performances as described above to find that the intended objects can be achieved by an epoxy resin composition comprising an oxazolidone ring-containing epoxy resin, and a small amount of salt and/or hydroxide of an alkali metal and/or of an alkaline earth metal, and they accomplished this invention.

Namely, this invention provides an epoxy resin composition, comprising (A) an oxazolidone ring-containing epoxy resin and (B) 0.01 to 50 ppm of an alkali metal salt and/or of an alkaline earth metal salt and/or of a hydroxide of an alkali metal and/or of an alkaline earth metal based on the amount of the epoxy resin.

This invention will be described below more specifically.

The oxazolidone ring-containing epoxy resin (A) (hereinafter referred to as component (A)) is preferably an oxazolidone rings containing epoxy resin containing oxazolidone rings in an amount of 0.5 to 10 equivalents/kg, preferably 0.5 to 5 equivalents/kg.

The reason is because the epoxy resin is required to contain the specified amount of oxazolidone rings so that it can exhibit tenacity and heat resistance. If the amount of the oxazolidone ring is greater than the specified level, waterproofing property of the resin will be lowered.

The epoxy content of the component (A) is preferably 200 to 10,000 g/eq, more preferably 250 to 5,000 g/eq, still more preferably 250 to 2,000 g/eq. If the epoxy equivalent is greater than the specified range, the resulting resin composition comes to have reduced heat resistance and waterproofing property; whereas if it is smaller than the specified range, the resin composition comes to have reduced tenacity.

While the component (A) contains at least one epoxy functional group on an average per molecule, preferably 1.2 to 5 epoxy functional groups on an average per molecule, more preferably 1.2 to 3 epoxy functional groups on an average per molecule.

If the number of the epoxy functional groups in the component (A) is greater than the specified range, the resulting resin composition comes to have reduced storage stability, although the composition may have improved heat resistance; whereas if it is smaller than the specified range, the resulting resin composition comes to have reduced heat resistance.

Compounds (A) to be be used in the present invention are described for example in Japanese Kokai Hei 5-43655.

The component (A) can be prepared in substantially stoichiometric amount, for example, by reacting a glycidyl compound with an isocyanate compound in the presence of an oxazolidone ring forming catalyst. For example, the isocyanate compound and the glycidyl compound are reacted at an equivalent weight ratio of the former to the latter of 1 : 1 to 1 : 10 to obtain an oxazolidone ring-containing epoxy resin.

If the amount of the isocyanate compound employed is smaller than the specified range, the amount of the oxazolidone rings will be too small, and the heat resistance of the resulting composition will be lowered; whereas if it is greater than the specified range, waterproofing property of the resulting composition will be reduced.

The raw material glycidyl compound to be employed for preparing the component (A) includes, for example, glycidyl ethers, glycidyl esters, glycidyl amines, linear aliphatic epoxides and cycloaliphatic epoxides.

The glycidyl ethers include, for example, bisphenol diglycidyl ethers, novolak polyglycidyl ethers and alkyl glycidyl ethers.

The glycidyl ethers can typically be exemplified by compounds obtained by glycidylation of divalent phenols such as bisphenol A, bisphenol F, bisphenol AD, bisphenol S, tetramethyl bisphenol A, tetramethyl bisphenol F, tetramethyl bisphenol AD, tetramethyl bisphenol S, tetrabromobisphenol A, tetrachlorobisphenol A, tetrachlorobisphenol A, biphenols such as 4,4'-biphenol or 3,3',5,5'-tetramethyl-4,4'-biphenol, dihydroxynaphthalene, and also compounds obtained by glycidylation of tris(glycidyloxyphenyl)alkanes or aminophenols, such as 1,1,1-tris(4-hydroxyphenyl)methane, 1,1,1 -(4-hydroxyphenyl)ethane, 4,4-[1-[4-[1-(4-hydroxyphenyl)-1-methylethyl]phenyl]ethylidene]bisphenol.

The glycidyl ethers also include compounds obtained by glycidylation of novolaks such as phenol novolak and cresol novolak, bisphenol A novolak, brominated phenol novolak and brominated bisphenol A novolak.

Meanwhile, glycidyl esters include, for example, diglycidyl esters of hexahydrophthalic acid and diglycidyl esters of dimer acids. The linear aliphatic epoxides include, for example, epoxidized polybutadiene and epoxidized soyabean oil.

The cycloaliphatic epoxides include, for example, 3,4-epoxy-6-methylcyclohexyl carboxylate and 3,4-epoxycyclohexyl carboxylate.

These raw material glycidyl compounds may be used singly or as a combination of two or more of them.

Preferred glycidyl compounds are glycidyl compounds of bisphenol A, of bisphenol F, of tetrabromobisphenol A and of 3,3',5,5'-tetramethyl-4,4'-biphenol.

The raw material isocyanate compound for obtaining the component (A) resin non limitatively includes, for example, bifunctional isocyanate compounds such as methanediisocyanate, butane-1,1-diisocyanate, ethane-1,2-diisocyanate, butane-1,2-diisocyanate, trans-vinylenediisocyanate, propane-1,3-diisocyanate, butane-1,4-diisocyanate, 2-butene-1,4-diisocyanate, 2-methylbutene-1,4-diisocyanate, 2-methylbutane-1,4-diisocyanate, pentane-1,5-diisocyanate, 2,2-dimethylpentane-1,5-diisocyanate, hexane-1,6-diisocyanate, heptane-1,7-diisocyanate, octane-1,8-diisocyanate, nonane-1,9-diisocyanate, decane-1,10-diisocyanate, dimethylsilanediisocyanate, diphenylsilanediisocyanate, ω,ω'-1,3-dimethylbenzenediisocyanate, ω,ω'-1,4-dimethylbenzenediisocyanate, ω,ω'-1,3-dimethylcyclohexanediisocyanate, ω,ω'-1,4-dimethylcyclohexanediisocyanate, ω,ω'-1,4-dimethylnaphthalenediisocyanate, ω,ω'-1,5-dimethylnaphthalenediisocyanate, cyclohexane-1,3-diisocyanate, cyclohexane-1,4-diisocyanate, dicyclohexylmethane-4,4'-diisocyanate, 1,3-phenylenediisocyanate, 1,4-phenylenediisocyanate, 1-methylbenzene-2,4-diisocyanate, 1-methylbenzene-2,5-diisocyanate, 1-methylbenzene-2,6-diisocyanate, 1-methylbenzene-3,5-diisocyanate, diphenylether-4,4'-diisocyanate, diphenylether-2,4'-diisocyanate, naphthalene-1,4-diisocyanate, naphthalene-1,5-diisocyanate, biphenyl-4,4'-diisocyanate, 3,3'-dimethylbiphenyl-4,4'-diisocyanate, 2,3'-dimethoxybiphenyl-4,4'-diisocyanate, diphenylmethane-4,4'-diisocyanate, 3,3'-dimethoxydiphenylmethane-4,4'-diisocyanate, 4,4'-di-methoxydiphenylmethane-3,3'-diisocyanate, diphenylsulfite-4,4'-diisocyanate and diphenylsulfone-4,4'-diisocyanate; polyfunctional isocyanate compounds such as polymethylene polyphenylisocyanate, triphenylmethanetriisocyanate and tris(4-phenylisocyanate-thiophosphate)-3,3',4,4'-diphenylmethanetetraisocyanate; and multi-polymers such as dimers and trimers of the above isocyanate compounds; and block isocyanate and bisurethane compounds masked by alcohols or phenols. These isocyanate compounds may also be used as a combination of two or more of them.

Of the raw material isocyanate compounds for the component (A) resin, preferred are the bifunctional or trifunctional isocyanate compounds, and the bifunctional isocyanate compounds are more preferred.

If the functionality of the isocyanate compound is too great, storage stability of the resulting composition will be reduced; whereas if it is too small, the resulting composition cannot exhibit heat resistance.

Of these compounds, readily available isocyanate compounds represented by the general formula [1] or [2] are preferably used.

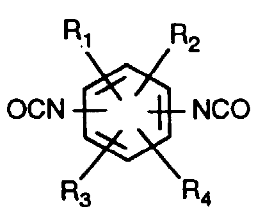

[1],

wherein $R_1$ to $R_4$ each represent a hydrogen atom or an alkyl group having 1 to 4 carbon atoms

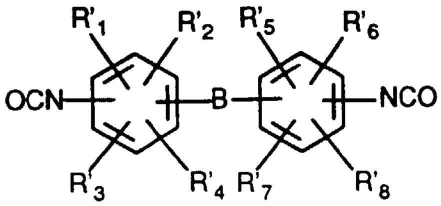 [2],

wherein $R_1$' to $R_8$' each and independently represent a hydrogen atom or an alkyl group having 1 to 4 carbon atoms; and B represents a single bond, $-CH_2-$, $-C(CH_3)_2-$, $-SO_2-$, -SO-, -CO-, -S- or -O-.

The component (A) resin can be prepared, for example, in the presence of an oxazolidone ring forming catalyst.

As the oxazolidone group forming catalyst, those which allow formation of oxazolidone ring selectively in the reaction between a glycidyl compound and an isocyanate compound are preferred.

As the catalyst which allows formation of oxazolidone ring in the above reaction can be exemplified by lithium compounds such as lithium chloride and butoxy lithium; complex salts of boron trifluoride; quaternary ammonium salts such as tetramethylammonium chloride, tetramethylammonium bromide and tetramethylammonium iodide, tetrabutylammonium chloride, bromide and iodide, tetraethylammonium chloride, bromide and iodide, and benzyltriethylammonium iodide; tertiary amines such as dimethylaminoethanol, triethylamine, tributylamine, benzyldimethylamine and N-methylmorpholine; phosphines such as triphenylphosphine; phosphonium compounds such as allyltriphenylphosphonium bromide, diallyldiphenylphosphonium bromide, ethyltriphenylphosphoniuom chloride, ethyltriphenylphosphonium iodide, tetrabutylphosphonium acetate·acetic acid complex, tetrabutylphosphonium acetate, tetrabutylphosphonium chloride, tetrabutylphosphonium bromide and tetrabutylphosphonium iodide; a combination of triphenyl antimony and iodine; and imidazoles such as 2-phenylimidazole and 2-methylimidazole. While these catalysts may be used singly or as a combination of two or more of them, the oxazolidone ring forming catalyst employable in this invention may not be limited to them.

Preferred catalysts are the quaternary ammonium salts, in particular tetrabutylammonium bromide (TBAB) and tetramethylammonium chloride (TMAC).

The oxazolidone group forming catalyst is used in an amount in the range of 5 ppm to 20,000 ppm relative to the raw material employed, preferably 10 to 10,000 ppm, more preferably 20 to 5000 ppm, still more preferably 20 to 1000 ppm. If the catalyst is added in an amount exceeding the specified level, it remains as an impurity in the resulting resin to cause reduction in the insulating property and moisture resistance of the resulting resin composition, when used for the above-described applications, particularly as the laminate or sealing materials; whereas if the catalyst is added in an amount smaller than the specified level, the efficiency of obtaining the desired resin will be lowered. In order to remove the catalyst, the epoxy resin of the invention may be filtered using a suitable solvent which substantially does not dissolve the catalyst.

The component (A) resin can also be prepared in the presence of a suitable solvent which can dissolve the component (A) resin.

When a solvent is to be employed, an inert solvent, for example, N-dimethylformamide, N,N-diethylformamide, N-methyl-2-pyrrolidone, dimethyl sulfoxide, methyl ethyl ketone, xylene, toluene, methyl cellosolve and tetrahydrofuran; tetrahydrofuran is preferred.

These compounds may be used singly or as a combination of two or more of them.

The component (A) is prepared by charging a predetermined amount of raw material epoxy resin in a reactor, followed by heating to adjust the temperature of the system to a predetermined level. Subsequently, a catalyst is charged as such or as dissolved in water or a suitable solvent at a temperature of 20 to 200°C, preferably at 80 to 200°C, more preferably 110 to 180°C.

If the catalyst is charged at a temperature below the specified range, the reaction between the epoxy groups and the intramolecular secondary alcoholic groups is accelerated before reaching the specified reaction temperature to lower the epoxy group concentration. If the catalyst is charged at a temperature above the specified range, the reaction is liable to proceed too quickly.

Subsequently, the isocyanate compound is dropped at one time or in several portions stepwise or continuously. The dropping is carried out over 1 to 10 hours, more preferably 2 to 5 hours.

If the dropping time is shorter than the specified range, formation of the isocyanurate rings is accelerated; whereas if it is longer than the specified range, the resulting resin comes to have a lowered epoxy group concentration. In any case, the resulting resin comes to have reduced performance and storage stability.

The reaction is usually carried out in a temperature range of 20 to 300°C, preferably 60 to 250°C, more preferably 120 to 230°C, still more preferably 140 to 220°C, particularly preferably 140 to 200°C.

If the reaction is carried out at a temperature higher than the specified range, deterioration of the resin is liable to

be caused; whereas if the reaction is carried out at a temperature lower than the specified range, not only the reaction may not fully be completed, but also the resulting resin comes to contain a large amount of triisocyanurate rings, unfavorably.

Accordingly the resulting resin in any case comes to have lowered storage stability and waterproofing property.

When the component (A) is to be prepared using a glycidyl compound and an isocyanate compound, a phenol compound may further be added.

The phenol compound includes, for example, bisphenol A, bisphenol F, bisphenol AD, bisphenol S, tetramethyl bisphenol A, tetramethyl bisphenol F, tetramethyl bisphenol AD, tetramethyl bisphenol S, tetrabromobisphenol A, tetrachlorobisphenol A, tetraphlorobisphenol A, a biphenol and dihydroxynaphthalene; tris(glycidyloxyphenyl)alkanes such as 1,1,1-tris(4-hydroxyphenyl)methane, 1,1,1-(4-hydroxyphenyl)ethane and 4,4-[1-[4-[1-(4-hydroxyphenyl)-1-methylethyl]phenyl]ethylidene]bisphenol; aminophenol, phenol novolak, cresol novolak, bisphenol A novolak, brominated phenol novolak and brominated bisphenol A novolak.

These compounds may be used singly or as a combination of two or more of them.

The amount of the hydrolizable chlorine in the component (A) is preferably 500 ppm or less, more preferably 200 ppm or less, still more preferably 100 ppm or less, particularly preferably 50 ppm or less, especially 30 ppm or less.

The hydrolizable chlorine if contained in an amount greater than the specified level will cause reduction of heat resistance, or corrosion of gold, silver, copper, aluminum, etc. employed as the circuits and the like, when employed in the electric and electronic fields, leading to reduction in the insulating property.

Further, the content of the α-glycol groups in the component (A) is preferably 100 meq/kg or less, more preferably 50 meq/kg or less, still more preferably 30 meq/kg or less, particularly preferably 20 meq/kg or less.

If the content of the α-glycol groups is greater than the specified range, the waterproofing property will be lowered.

The ratio of the absorption intensity at the wave number of 1,710 $cm^{-1}$ attributable to the isocyanurate ring to the absorption intensity at the wave number of 1,750 $cm^{-1}$ attributable to the oxazolidone ring is desirably regulated to a value of 0.1 or less.

If the IR intensity ratio exceeds 0.1, not only the storage stability but also the waterproofing property etc. of the composition will be lowered.

It is also desired that the component (A) contains a residue of unreacted starting material glycidyl compound. The unreacted glycidyl compound is desirably a monomer component. While the glycidyl compound, in the case of bisphenol A diglycidyl ether, is represented by the following general formula (3):

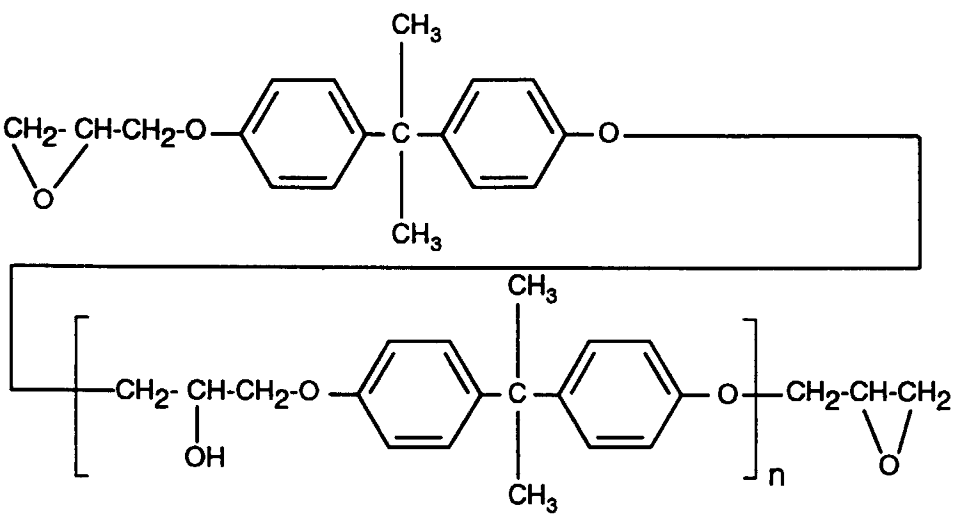

(3),

wherein n is 0 or a positive integer; the monomer component refers to such compound in which n = 0.

The component (A) preferably contains 5 to 80 wt %, more preferably 10 to 60 wt %, still more preferably 15 to 50 wt %, particularly preferably 20 to 40 wt %, of the unreacted monomer component of the starting material glycidyl compound.

If the amount of the unreacted monomer component is smaller than the specified range, the concentration of the glycidyl groups will be lowered to lower the curing reaction speed; whereas if it is greater than the specified range, the oxazolidone rings may not be able to be incorporated at a high concentration, leading to reduction in the heat resistance.

Meanwhile, the alkali metal refers to those belonging to Group I elements of the Periodic Table, such as lithium, sodium, potassium and rubidium; whereas the alkaline earth metal refers to those belong to Group II elements of the

Periodic Table, such as beryllium, magnesium and calcium.

The salts of the alkali and alkaline earth metals include, for example, halides, nitrates, sulfates, sulfites, carbonates, carboxylates, phosphates and sulfonates.

The halides include, for example, lithium fluoride, sodium fluoride, potassium fluoride, rubidium fluoride, beryllium fluoride, magnesium fluoride, calcium fluoride, lithium chloride, sodium chloride, potassium chloride, rubidium chloride, beryllium chloride, magnesium chloride, calcium chloride, lithium bromide, sodium bromide, potassium bromide, rubidium bromide, beryllium bromide, magnesium bromide, calcium bromide, lithium iodide, sodium iodide, potassium iodide, rubidium iodide, beryllium iodide, magnesium iodide and calcium iodide.

The nitrates include, for example, lithium nitrate, sodium nitrate, potassium nitrate, rubidium nitrate, beryllium nitrate, magnesium nitrate and calcium nitrate.

The sulfates include, for example, lithium sulfate, sodium sulfate, potassium sulfate, rubidium sulfate, beryllium sulfate, magnesium sulfate and calcium sulfate.

The sulfites include, for example, potassium sulfite, calcium sulfite, silver sulfite, potassium hydrogensulfite and sodium hydrogensulfite.

The carbonates include, for example, potassium carbonate, sodium potassium carbonate, calcium carbonate, potassium hydrogencarbonate, sodium hydrogencarbonate, lithium hydrogencarbonate, sodium carbonate, magnesium carbonate, lithium carbonate and rubidium carbonate.

The carboxylates include, for example, lithium acetate, sodium acetate, potassium acetate, rubidium acetate, lithium propionate, sodium propionate, potassium propionate and rubidium propionate.

The hydroxides include, for example, lithium hydroxide, sodium hydroxide, potassium hydroxide, rubidium hydroxide, beryllium hydroxide, magnesium hydroxide and calcium hydroxide.

Preferred metal salts resp. hydroxides are halogenides such as NaCl and KCl, and hydroxides such as NaOH and KOH, or mixtures of these salts (hydroxide/halogenide).

The alkali and alkaline earth metals and the hydroxides may be added in the form of solution in an inert solvent or water. These solvents are preferably removed after the addition by means of, for example, distillation under reduced pressure.

The alkali metal, alkaline earth metal or hydroxide is added in an amount of 0.01 to 50 ppm relative to the component (A), more preferably 0.02 to 10 ppm, still more preferably 0.03 to 1 ppm.

If the amount of the alkali metal is smaller than the specified range, the curing reaction speed is lowered; whereas if it is greater than the specified range, the cured product comes to have reduced insulating property etc.

The present composition is incorporated with a curing agent, and the curing agent employable includes, for example, amine type curing agents, dicyandiamide and polyaminoamide type curing agents, acid and acid anhydride curing agents, tertiary amine compounds, imidazole compounds, Lewis acids, Bronsted acid, polymercaptane type curing agents, phenol resins, resol resins, urea resins, melamine resins, isocyanate compounds, block isocyanate compounds and novolak phenols.

The amine type curing agents include, for example, aliphatic amines, aromatic amines, secondary and tertiary amines.

The aliphatic amines can be exemplified by linear amines such as ethylenediamine, 1,3-diaminopropane, 1,4-diaminopropane, hexamethylenediamine, 2,5-dimethylhexamethylenediamine, trimethylhexamethylenediamine, diethylenetriamine, iminobispropylamine, bis-(hexamethylene)triamine, triethylenetetramine, tetraethylenepentamine, pentaethylenehexamine, aminoethylethanolamine, tri(methylamino)hexane, dimethylaminopropylamine, 1,3,6-trisaminomethylhexane, polymethylenediamine, trimethylhexamethylenediamine, diethylene glycol bispropylenediamine, diethylaminopropylamine, methyliminobispropylamine and 2,5-dimethyl-2,5-hexanediamine; and cyclic amines such as tris(4-amino-3-methylcyclohexyl)methane, mensenediamine, isophoronediamine, diaminodicyclohexylmethane, ethylaminopiperazine, hydrogenated 1,3,5-tris(aminomethyl)benzene and aminoethylpiperazine.

The aliphatic amines also include those having aromatic rings such as tetrachloro-p-xylylenediamine, m-xylylenediamine and p-xylenediamine. The aromatic amines can be exemplified by m-phenylenediamine, o-phenylenediamine, p-phenylenediamine, 2,4-diaminoanisole, 2,4-toluenediamine, 2,4-diaminodiphenylmethane, 4,4'-diaminodiphenylmethane, 2,4-diaminodiphenylsulfone, 4,4'-diaminodiphenylsulfone, diaminodixylylsulfone, 3,3'-diethyl-4,4'-diaminophenylmethane, 2,6-diaminopyridine, m-aminophenol, m-aminobenzylamine and 4-chloro-orthophenylenediamine.

Meanwhile, the secondary and tertiary amines can be exemplified by triethylamine, benzyldimethylamine, 2-(dimethylaminomethyl)phenol, 2,4,6-tris(dimethylaminomethyl)phenol, tetramethylguanidine, triethanolamine, N,N-dimethylpiperazine, 1,4-diazadicyclo(2,2,2)octane(triethylenediamine), pyridine, picolin, piperidine, pyrrolidine and tris (dimethylaminomethyl)phenol-tris-etllylhexylic acid salts.

The polyaminoamide type curing agents include, for example, commercially available TOMIDE (Fuji Kasei), VERSAMIDE, GENAMIDE (Henkel Hakusui), LUCKAMIDE (Dai Nippon Printing Co., Ltd.), SANMIDE (Sanwa Kagaku) and POLYMIDE (Sanyo Kasei).

The acid and acid anhydride curing agents include, for example, dodecenylsuccinic anhydride, polyadipic anhydride, polyazelaic anhydride, polysebacic anhydride, poly(ethyloctadecane diacid)anhydride, poly(phenylhexadecane diacid)anhydride, methyltetrahydrophthalic anhydride, methylhexahydrophthalic anhydride, methyl hymic anhydride, hexahydrophthalic anhydride, tetrahydrophthalic anhydride, trialkyltetrahydrophthalic anhydride, methylcyclohexenedicarboxylic anhydride, phthalic anhydride, trimellitic anhydride, pyromellitic anhydride, benzophenonetetracarboxylic anhydride, ethylene glycol bistrimellitate, HET anhydride (hexachloro-endomethylene tetrahydrophthalic anhydride) and tetrabromophthalic anhydride.

The tertiary amine compounds can be exemplified by tris(dimethylaminomethyl)phenol, dimethylbenzylamine and 1,8-diazacyclo(5,4,0)undecane.

The imidazole compounds include, for example, 2-methylimidazole, 2-ethyl-4-methylimidazole, 2-undecylimidazole, 2-heptadecylimidazole, 2-phenylimidazole, 1 -benzyl-2-methylimidazole, 1-cyanoethyl-2-methylimidazole, 1-cyanoethyl-2-ethyl-4-methylimidazole, 1-cyanoethyl-2-undecylimidazole, 1-cyanoethyl-2-undecylimidazoliumtrimellitate, 1-cyanoethyl-2-phenylimidazoliumtrimellitate, 2-methylimidazoliumisocyanurate, 2-phenylimidazoliumisocyanurate, 2,4-diamino-6-[2-methylimidazolyl-(1)]-ethyl-s-triazine, 2,4-diamino-6-[2-ethyl-4-methylimidazolyl-(1)]-ethyl-s-triazine, 2,4-amino-6-[2-undecylimidazolyl(1)]-ethyl-s-triazine, 2-phenyl-4,5-dihydroxymethylimidazole, 2-phenyl-4-methyl-5-hydroxymethylimidazole, 1-cyanoethyl-2-phenyl-4,5-di(cyanoethoxymethyl)imidazole, 1-dodecyl-2-methyl-3-benzylimidazolium chloride and 1,3-dibenzyl-2-methylimidazolium chloride.

The Lewis acids and Bronsted acid salts include, for example, boron trifluoride-amine complex, phosphorus pentafluoride-amine complex, arsenic pentafluoride-amine complex and antimony pentafluoride-amine complex.

The polymercaptane type curing agents include, for example, commercially available Capcure and Epomate (Yuka Shell Epoxy) and Adeca Hardener (Asahi Denka Kogyo).

The novolak phenols include, for example, phenol novolak, crezol novolak and bisphenol A novolak.

The curing agent employable according to this invention may not be limited to those exemplified above, and these curing agents may be employed singly or as a combination of two or more.

The curing agent may be used in an optimum amount depending on the agent employed. The composition of the invention can be dissolved in a solvent singly or together with a curing agent to be prepared into an epoxy resin varnish. As the solvent, acetone, methyl ethyl ketone, methyl cellosolve, methyl isobutyl ketone and dimethylformamide may be used singly or as a combination of two or more of them.

Meanwhile, the composition of the invention can be used in combination with one or more of other epoxy resins and/or phenol compounds. The epoxy compounds and phenol compounds employable include those described above.

Further, a diluent, a coupling agent, a filler, etc. can additionally be employed depending on the application.

The diluent includes, for example, reactive diluents such as butyl glycidyl ether, allyl glycidyl ether, 2-ethylhexyl glycidyl ether, styrene ether, phenyl glycidyl ether, cresyl glycidyl ether, butylphenyl glycidyl ether, glycidyl methacrylate and vinylcyclohexene monoepoxide; and benzene, toluene, xylene, alcohols, ketones, styrene monomers and dioctyl phthalate.

The coupling agent includes, for example, silane type coupling agents and titanium type coupling agents.

The filler includes, for example alumina, asbestos, carbon black, graphite, diatomaceous earth, magnesium oxide, titanium oxide, aluminum hydroxide, quartz powder, fused silica powder, talc, baryte and mica.

Further, a coloring agent, a leveling agent, a siccing agent, a defoaming agent, etc. may be added depending on the application. A glass fiber, a glass fabric, a carbon fiber may also be incorporated, as necessary.

The thus obtained epoxy resin composition has well-balanced heat resistance, tenacity and adhesion and also high curing speed, and can suitably be used as a civil engineering and building material, a powder coating material, a PCM coating material, a laminate material, a sealing material, a casting material, an adhesive, a composite material and the like.

The present invention will be illustrated in more detail by way of the following examples. The characteristic properties referred to in the examples were measured by the following methods.

(1) Epoxy equivalent

This is mass of resin containing 1 gram equivalent of epoxy group. It was determined according to JIS K-7236 (Japan Industrial Standard).

(2) Content of hydrolizable chlorine

Three grams of sample were dissolved into 50 ml of toluene. After adding thereto 20 ml of 0.1N methanolic solution of KOH and boiling the mixture for 15 minutes, it was titrated with silver nitrate to determine total chlorine content. On the other hand, inorganic chlorine content was determined by dissolving the same sample as above into toluene and titrating it with silver nitrate. By subtracting the inorganic chlorine content from the total chlorine content, the content

of hydrolizable chlorine was determined.

(3) $\alpha$-Glycol content

Three grams of sample were dissolved into 25 ml of chloroform. After adding 25 ml of a solution of benzyltrimethylammonium periodate, it was reacted for 2.5 hours. After adding 5 ml of 2N aqueous sulfuric acid and 15 ml of 20 % aqueous solution of potassium iodide, the mixture was titrated with 0.1N solution of sodium thiosulfate.

(4) IR intensity ratio

Sample was dissolved into tetrahydrofuran (THF) to prepare a solution having a sample concentration of 10 % by weight. The THF solution (30 $\mu$l) was taken and dropped onto the cell (made of KRS-5) of infrared spectrophotometer, and the THF was evaporated off by means of a drier. The sample was covered with another cell made of KRS-5 of infrared spectrophotometer so that the sample was held between the two cells. By means of Fourier conversion type infrared spectrometer (FT-IR 1640, PERKIN ELMER), an infrared absorption specturm was measured at an integration number 64.

In this infrared absorption spectrum, the straight line linking the peak of wavenumber 1695 $cm^{-1}$ and the peak of wavenumber 1790 $cm^{-1}$ was taken as base line. From the maximum absorption due to isocyanurate ring (1700 $cm^{-1}$ to 1715 $cm^{-1}$), the absorption of base line at the same wave number was deducted, and the residue was taken as IR-1 (referred to as absorption as 1710 $cm^{-1}$). From the maximum absorption at a wave number of 1730 $cm^{-1}$ to 1770 $cm^{-1}$ the absorption of base line at the same wave number was deducted, and the residue was taken as IR-0 (referred to as absorption at 1750 $cm^{-1}$).

IR intensity ratio is expressed by the following formula:

$$\text{IR intensity ratio} = \frac{\text{IR-1}}{\text{IR - 0}}$$

(5) GPC analysis (N=0 ingredient)

| Condition of GPC measurement | |
|---|---|
| Pump | 802 type manufactured by Toyo Soda Mfg. Co., Ltd. |
| Detector | RI-8 type manufactured by Toyo Soda Mfg. Co., Ltd. |
| Column | One piece of Showdex A-804 manufactured by Showa Denko K.K.<br>One piece of Showdex A-803 manufactured by Showa Denko K.K.<br>One piece of Showdex A-802 manufactured by Showa Denko K.K. |
| Transfer layer | tetrahydrofuran 1.5 ml/min |

Data were obtained from peaks (N=0 ingredient) during about 45 minutes of extrusion under said conditions.

(6) Gel time

Gel time was measured by placing sample on a hot plate kept at 160°C, bringing tip of a bamboo-spatula into contact with the sample and raising the spatula vertically up to a height of 5 cm. The period by the time when the sample had become giving an unbroken filament was taken as gel time.

(7) Storage stability of varnish

Storage stability of varnish

$$\frac{\text{Gel time after storage}}{\text{Initial gel time}} \times 100$$

An initial gel time was measured just after preparation of varnish. Gel time after storage was measured after storage at 40°C for 30 days. Gel time after storage divided by inital gel time was taken as the storage stability of varnish, in terms of per cent.

(8) Glass transition temperature (Tg)

A varnish was cured in oven at 170°C for 60 minutes, after which Tg was measured by means of DSC (DSC 220 manufactured by SEIKO).

(9) Adhesiveness

Varnish was cured in an oven at 170°C for 1 hour, adhesiveness of varnish was tested by a method of squares according to JIS K-5400, Peeling on the surface was examined. Criterion of the evaluation was as follows:
O: Area of peeling smaller than 5 %; Δ: Area of peeling of 5 - 15 %; X: area of peeling of 15 % or above.

(10) Erichsen elongation

A varnish was cured in an oven at 170°C for 1 hours, then its Erichsen elongation was measured according to JIS-Z 2247.

(11) Insulation resistance

A varnish was applied and impregnated into a glass cloth (216L manufactured by Asahi Schoever Co., treated with AS 450) and dried at 160°C. Thus, prepregs having a resin content of about 40 % were obtained. After superposing 8 sheets of each prepreg thus obtained, a copper foil having a thickness of 35 μ was placed on both sides, and the whole was molded with heat and pressure at temperature of 170°C x 30 $kg/cm^2$ over a period of 60 minutes. Thus, a copper-lined laminate board was obtained. Tis insulation resistance was measured according to JIS C-6481.

Example 1:

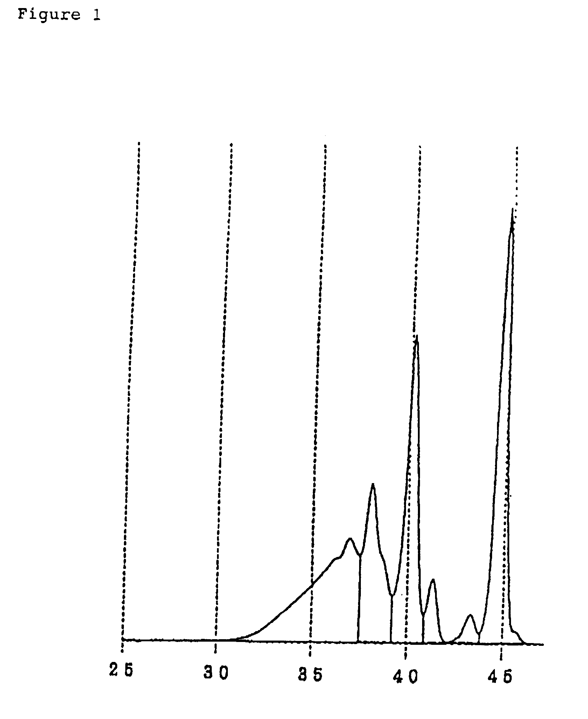

In 100 kg of bisphenol A type glycidyl ether (epoxy equivalent of 189) are charged 40 g of tetrabutylammonium bromide. It is heated with stirring to adjust the inner temperature to 175°C. Then 16.1 kg of Collonate T-80 (TDI manufactured by Japan Polyurethane Co.; about 80 % of 2,4-tolylene diisocyanate; about 20 % of 2,6-tolylene diisocyanate) are added thereto over a period of 120 minutes. After the addition, the resulting mixture is reacted for 4 hours while stirring at a constant reaction temperature of 175°C to obtain Epoxy resin I containing an oxazolidone ring. The GPC analysis chart of the epoxy resin containing an oxazolidone ring is shown in Figure 1. The temperature is subsequently lowered to 120°C, and 0.4g of 25 wt% NaCl aqueous solution are added thereto. After reducing the pressure to 200 torr, the mixture is stirred for 1 hour to obtain Epoxy resin Composition I.

Example 2:

Example 1 is repeated, except that 4 g of 25 wt% NaCl aqueous solution are used instead of 0.4 g of 25 wt% NaCl aqueous solution to obtain Epoxy resin composition II.

Example 3:

Example 1 is repeated, except that 0.2 g of 48 st% of NaCl aqueous solution are added instead of 0.4 of 25 wt% NaCl aqueous solution after cooling to the room temperature to obtain Epoxy resin composition III.

Example 4:

Example 1 is repeated, except that 0.5 g of 20 wt% KCl aqueous solution are added instead of 0.4 g of 25 wt% NaCl aqueous solution to obtain Epoxy resin composition IV.

Example 5:

In 100 kg of bisphenol A type glycidyl ether (epoxy equivalent of 189) are charged 40 g of tetrabutylammonium bromide. It is heated with stirring to adjust the inner temperature to 175°C. Then 11.5 kg of Collonate T-80 (TDI manufactured by Japan Polyurethane Co.; about 80 % of 2,4-tolylene diisocyanate; about 20 % of 2,6-tolylene diisocyanate) are added thereto over a period of 120 minutes. After adding it, the resulting mixture is reacted for 4 hours while stirring at a constant reaction temperature of 175°C to obtain Epoxy resin II containing an oxazolidone ring.

Epoxy resin Composition V is prepared by conducting the rest of the procedures as mentioned in Example 1.

Example 6:

In 100 kg of bisphenol A type glycidyl ether (epoxy equivalent of 189) are charged 40 g of tetrabutylammonium bromide. It is heated with stirring to adjust the inner temperature to 175°C. Then 23.0 kg of Collonate T-80 (TDI manufactured by Japan Polyurethane Co.; about 80 % of 2,4-tolylene diisocyanate; about 20 % of 2,6-tolylene diisocyanate) are added thereto over a period of 120 minutes. After adding it, the resulting mixture is reacted for 4 hours while stirring at a constant reaction temperature of 175°C to obtain Epoxy resin III containing an oxazolidone ring.

Epoxy resin Composition V is prepared by conducting the rest of the procedures as mentioned in Example 1.

Characteristics of Epoxy resins containing an oxazolidone ring I - III are shown in Table 1.

Application example 1-6:

Using each of Epoxy resin composition I - IV obtained in Example 1, an epoxy resin varnish is prepared according to the formulation shown in Table 2 and the properties of the varnish and the cured product are evaluated.

Application comparative example 1:

Using Epoxy resin containing oxazolidone ring obtained in Example 1, an epoxy resin varnish is prepared according to the formulation shown in Table 2 and the properties of the varnish and the cured product are evaluated. Pbw means parts by weight.

Application comparative example 2:

Example 1 is repeated, except that 4 g of 25 wt% NaCl aqueous solution are used instead of 0.4g of 25 wt% NaCl aqueous solution to obtain Epoxy resin composition IV. An epoxy resin varnish is prepared according to the formulation shown in Table 2 and the properties of the varnish and the cured product are evaluated.

Application comparative example 3:

Using ECN 299 (epoxy cresol novolak manufactured by Asahi Chemical Industry Co., Ltd.), an epoxy resin varnish is prepared according to the formulation shown in Table 2 and the properties of the varnish and the cured product are evaluated.

Application comparative example 4:

Using AER 661 (bisphenol A diglycidyl ether manufactured by Asahi Chemical Industry Co., Ltd.), an epoxy resin varnish is prepared according to the formulation shown in Table 2 and the properties of the varnish and the cured product are evaluated.

Table 1

| | Epoxy equivalent (g/eq) | Hydrolizable chlorine (ppm) | α-glycol (meq/kg) | IR intensity ratio | N=0 ingredient (% by weight) |
|---|---|---|---|---|---|
| Epoxy resin containing oxazolidone ring I | 334 | 130 | <3 | 0.05 | 28 |
| Epoxy resin containing oxazolidone ring II | 279 | 140 | <3 | 0.03 | 32 |
| Epoxy resin containing oxazolidone ring III | 461 | 125 | <3 | 0.07 | 20 |

Table 2

| | | Application example 1 | Application example 2 | Application example 3 |
|---|---|---|---|---|
| Formulation | Epoxy resin composition I | 100 | | |
| | Epoxy resin composition II | | 100 | |
| Pbw | Epoxy resin composition III | | | 100 |
| | Epoxy resin composition IV | | | |
| | Epoxy resin composition V | | | |
| | Epoxy resin composition VI | | | |
| | Epoxy resin composition containing oxazolidone ring I | | | |
| | Epoxy resin composition VII | | | |
| | ECN 299 | | | |
| | AER 661 | | | |
| | Dicyandiamide | 3.8 | 3.8 | 3.8 |
| | 2-ethyl-4-methyl-imidazole | 0.2 | 0.2 | 0.2 |
| | Methylethylketone | 20 | 20 | 20 |
| | Dimethylformamide | 20 | 20 | 20 |
| | Methylcellosolve | 20 | 20 | 20 |
| Gel time (sec) | | 280 | 250 | 250 |
| Storage stability of varnish | | 90 | 92 | 93 |
| Glass transition temperature (°C) | | 165 | 163 | 160 |
| Adhesiveness | | o | o | o |
| Erichsen Elongation (mm) | | 9.2 | 9.0 | 8.3 |
| Insulation resistance (Ω) | | $1.5 \times 10^{14}$ | $1.1 \times 10^{14}$ | $1.3 \times 10^{14}$ |

Table 2 continue

| | | Application example 4 | Application example 5 | Application example 6 |
|---|---|---|---|---|
| Formulation Pbw | Epoxy resin composition I | | | |
| | Epoxy resin composition II | | | |
| | Epoxy resin composition III | | | |
| | Epoxy resin composition IV | 100 | | |
| | Epoxy resin composition V | | 100 | |
| | Epoxy resin composition VI | | | 100 |
| | Epoxy resin composition containing oxazolidone ring I | | | |
| | Epoxy resin composition VII | | | |
| | ECN 299 | | | |
| | AER 661 | | | |
| | Dicyandiamide | 3.8 | 4.5 | 2.7 |
| | 2-ethyl-4-methyl-imidazole | 0.2 | 0.2 | 0.2 |
| | Methylethylketone | 20 | 20 | 20 |
| | Dimethylformamide | 20 | 20 | 20 |
| | Methylcellosolve | 20 | 20 | 20 |
| Gel time (sec) | | 260 | 240 | 300 |
| Storage stability of varnish | | 95 | 89 | 98 |
| Glass transition temperature (°C) | | 159 | 160 | 170 |
| Adhesiveness | | o | o | o |
| Erichsen Elongation (mm) | | 8.7 | 8.5 | 9.4 |
| Insulation resistance (Ω) | | $1.5 \times 10^{14}$ | $1.6 \times 10^{14}$ | $1.4 \times 10^{14}$ |

Table 2 continue

| | | Application comparative example 1 | Application comparative example 2 | Application comparative example 3 | Application comparative example 4 |
|---|---|---|---|---|---|
| Formulation | Epoxy resin composition I | | | | |
| | Epoxy resin composition II | | | | |
| Pbw | Epoxy resin composition III | | | | |
| | Epoxy resin composition IV | | | | |
| | Epoxy resin composition V | | | | |
| | Epoxy resin composition VI | | | | |
| | Epoxy resin composition containing oxazolidone ring I | 100 | | | |
| | Epoxy resin composition VII | | 100 | | |
| | ECN 299 | | | 100 | |
| | AER 661 | | | | 100 |
| | Dicyandiamide | 3.8 | 3.8 | 5.7 | 2.8 |
| | 2-ethyl-4-methyl-imidazole | 0.2 | 0.2 | 0.2 | 0.2 |
| | Methylethylketone | 20 | 20 | 20 | 20 |
| | Dimethylformamide | 20 | 20 | 20 | 20 |
| | Methylcellosolve | 20 | 20 | 20 | 20 |
| Gel time (sec) | | 440 | 180 | 230 | 260 |
| Storage stability of varnish | | 95 | 75 | 20 | 70 |
| Glass transition temperature (°C) | | 165 | 164 | 185 | 120 |
| Adhesiveness | | o | o | x | o |
| Erichsen Elongation (mm) | | 9.2 | 9.0 | 2.0 | 7.8 |
| Insulation resistance (Ω) | | $1.5 \times 10^{14}$ | $3.6 \times 10^{9}$ | $7.1 \times 10^{13}$ | $1.5 \times 10^{14}$ |

Effect of the invention / Comments on the Examples

It is apparent from Application Examples 1-6 that the glass transition temperature of the resin composition of the present invention is greatly raised in comparison with the conventional bisphenol A type epoxy resin.

It is apparent that the compositions of Application Examples 1-6 show conveniently shorter gel time than that of Application Comparative Example 1 (no alkali metal salt etc. was added) and thus have better processability.

The compositions of Application Examples 1-6 have better varnish storage stability, better insulation resistance and more preferred gel time for processing than that of Application Comparative Example 2 in which the amount of NaCl exceeds the limit of the present invention.

The compositions of Application Examples 1-6 have better varnish storagability, better adhesiveness and better Erichsen elongation in comparison with Application Comparative Example 3 in which an epoxycresol novolak is used. They have also better varnish storageability and heat stability than that of Application Comparative Example 4 in which bisphenol A glycidyl ether is used.

In comparison with cresol novolak epoxy resin, the varnish storage stability, adhesiveness and Erichsen elongation were greatly improved.

As mentioned above, the composition of the present invention has well-balanced properties of excellent heat stability, strength and adhesiveness and also has good storage stability and reactivity. Thus, it is useful as construction material, electronic appliances, paints, adhesives, molding material, composite material, sealing agents etc., in the field where epoxy resins have been conventionally used.

Figure 1: GPC analysis chart of the oxazolidone ring-containing epoxy resin manufactured in Example 1.

## Claims

1. An epoxy resin composition comprising (A) an epoxy resin containing an oxazolidone ring and (B) 0.01 - 50 ppm of an alkali metal salt or of an alkaline earth metal salt and/or of a hydroxide of an alkali metal and/or of an alkaline earth metal based on said epoxy resin.

2. An epoxy resin composition of claim 1, characterized in that the oxazolidone rings containing epoxy resin contains oxazolidone rings in an amount of 0.5 to 10 equivalent/kg.

3. An epoxy resin composition of claim 2, wherein the epoxy resin contains 0.5 to 5 equivalent/kg of oxazolidone rings.

4. An epoxy resin composition of claim 1, characterized in that the epoxy equivalent of the epoxy resin is 200 to 10,000 g/eq.

5. An epoxy resin composition of claim 4, wherein the epoxy equivalent is 250 to 5,000 g/eq.

6. An epoxy resin composition of claim 1, characterized in that the epoxy resin is prepared by reacting a glycidyl compound with an isocyanate compound in the presence of an oxazolidone ring forming catalyst.

7. An epoxy resin composition of claim 6, wherein the isocyanate is a bifunctional or trifunctional compound.

8. An epoxy resin composition of claim 1, wherein 0.02 to 10 ppm of component (B) are used.

9. An epoxy resin compostion of claim 1, wherein the compound (B) is an halogenide or an hydroxyde.

## Patentansprüche

1. Epoxyharzmasse, umfassend (A) ein Oxazolidonring enthaltendes Epoxyharz und (B) 0,01 - 50 ppm eines Alkalimetallsalzes oder eines Erdalkalimetallsalzes und/oder eines Hydroxids eines Alkalimetalls und/oder eines Erdalkalimetalls, bezogen auf das Epoxyharz.

2. Epoxyharzmasse nach Anspruch 1, dadurch gekennzeichnet, daß das die Oxazolidonringe enthaltende Epoxyharz Oxazolidonringe in einer Menge von 0,5 bis 10 Äquivalente/kg enthält.

3. Epoxyharzmasse nach Anspruch 2, wobei das Epoxyharz 0,5 bis 5 Äquivalente/kg Oxazolidonringe enthält.

4. Epoxyharzmasse nach Anspruch 1, dadurch gekennzeichnet, daß das Epoxy-Äquivalent des Epoxyharzes 200 bis 10 000 g/Äquiv. beträgt.

5. Epoxyharzmasse nach Anspruch 4, wobei das Epoxy-Äquivalent 250 bis 5000 g/Äquiv. beträgt.

6. Epoxyharzmasse nach Anspruch 1, dadurch gekennzeichnet, daß das Epoxyharz durch Umsetzen einer Glycidylverbindung mit einer Isocyanatverbindung in Gegenwart eines Katalysators für die Oxazolidonringbildung hergestellt wird.

7. Epoxyharzmasse nach Anspruch 6, wobei das Isocyanat eine bifunktionelle oder trifunktionelle Verbindung ist.

8. Epoxyharzmasse nach Anspruch 1, wobei 0,02 bis 10 ppm Komponente (B) verwendet werden.

9. Epoxyharzmasse nach Anspruch 1, wobei die Verbindung (B) ein Halogenid oder ein Hydroxid ist.

**Revendications**

1. Composition de résine époxy comprenant (A) une résine époxy contenant un cycle oxazolidone et (B) 0,01 à 50 ppm d'un sel de métal alcalin ou d'un sel de métal alcalino-terreux et/ou d'un hydroxyde d'un métal alcalin et/ou d'un métal alcalino-terreux par rapport à ladite résine époxy.

2. Composition de résine époxy selon la revendication 1, caractérisée en ce que la résine époxy contenant des cycles oxazolidones contient des cycles oxazolidone à raison de 0,5 à 10 équivalents/kg.

3. Composition de résine époxy selon la revendication 2, dans laquelle la résine époxy contient des cycles oxazolidone à raison de 0,5 à 5 équivalents/kg.

4. Composition de résine époxy selon la revendication 1, caractérisée en ce que l'équivalent d'époxy de la résine époxy est de 200 à 10 000 g/éq.

5. Composition de résine époxy selon la revendication 4, dans laquelle l'équivalent d'époxy est de 250 à 5 000 g/éq.

6. Composition de résine époxy selon la revendication 1, caractérisée en ce que la résine époxy est préparée en faisant réagir un composé glycidylique avec un composé isocyanate en présence d'un catalyseur formant un cycle oxazolidone.

7. Composition de résine époxy selon la revendication 6, dans laquelle l'isocyanate est un composé bifonctionnel ou trifonctionnel.

8. Composition de résine époxy selon la revendication 1, dans laquelle on utilise 0,02 à 10 ppm de composant (B).

9. Composition de résine époxy selon la revendication 1, dans laquelle le composé (B) est un halogénure ou un hydroxyde.

Figure 1